## Europäisches Patentamt
## European Patent Office
## Office européen des brevets

(19)

(11) Veröffentlichungsnummer: **0 139 025**
**B1**

(12) **EUROPÄISCHE PATENTSCHRIFT**

(45) Veröffentlichungstag der Patentschrift:
**16.09.87**

(21) Anmeldenummer: **83110027.6**

(22) Anmeldetag: **07.10.83**

(51) Int. Cl.⁴: **C 04 B 2/10**, F 27 B 1/02

(54) **Ringschachtofen.**

(43) Veröffentlichungstag der Anmeldung:
**02.05.85 Patentblatt 85/18**

(45) Bekanntmachung des Hinweises auf die Patenterteilung:
**16.09.87 Patentblatt 87/38**

(84) Benannte Vertragsstaaten:
**AT BE CH DE FR GB IT LI SE**

(56) Entgegenhaltungen:
**EP - A - 0 082 886**
**DE - A - 2 710 205**
**FR - A - 2 514 341**

**Die Akte enthält technische Angaben, die nach dem Eingang der Anmeldung eingereicht wurden und die nicht in dieser Patentschrift enthalten sind.**

(73) Patentinhaber: **Kalkwerke H. Oetelshofen GmbH & Co., Schöllerweg 68, D-5600 Wuppertal 11 (DE)**

(72) Erfinder: **Iseke, Hermann, Schöllerweg 68, D-5600 Wuppertal 11 (DE)**
Erfinder: **Peil, Rüdiger, Am Höfchen 43, D-5600 Wuppertal 11 (DE)**
Erfinder: **Schwirz, Hans-Joachim, Schöllerweg 53, D-5600 Wuppertal 11 (DE)**

(74) Vertreter: **Gille, Christian, Dipl.-Ing. et al, Türk, Gille + Hrabal Patentanwälte Bruckner Strasse 20, D-4000 Düsseldorf 13 (DE)**

ACTORUM AG

## Beschreibung

Die Erfindung betrifft einen Ringschachtofen zum Brennen von Kalkstein, Dolomit und dergleichen, mit einem aufrecht stehenden Aussenzylinder, in den von oben zerkleinerter roher Kalkstein, Dolomit und dgl. eingegeben und aus dem am unteren Ende beispielsweise Branntkalk abgeführt wird, mit einem zentralen Innenzylinder und mit an der Wand des Aussenzylinders ringförmig verteilt angeordneten Brennern, deren Heizgase durch das eingeschüttete zerkleinerte Gestein strömen.

Als Energieträger zum Brennen von Kalkstein verwendet man bisher Erdöl oder Gas. Diese Energieträger sind jedoch verhältnismässig kostspielig und weitgehend nur über Importe zu erhalten.

Es ist bereits bekannt (EP-A 82886), bei einem Ringschachtofen zum Brennen von Kalkstein, Dolomit und dgl. einen festen staubförmigen Brennstoff zu verwenden und am Schachtofen die Brenner gruppenweise in zwei Ebenen übereinander am Aussenzylinder des Ringschachtofens anzuordnen. Zum Zwecke der Temperaturregelung ist das Mengenverhältnis der den Brennern zugeführten Luft einstellbar. Mit einem derartigen Ringschachtofen gelingt es nicht, als Brennstoff wirksam heimische Kohle und insbesondere heimische Braunkohle benutzen zu können.

Andererseits ist es bei Schachtöfen zum Brennen von Kalk mit einem Umwälzgassystem bekannt (DE-A 2710205), die Menge des zugeführten gasförmigen Brennstoffes zu regeln, wobei in unterschiedlichen Brennerebenen Gas unterschiedlicher Qualität verwendet werden kann.

Es ist bisher nicht gelungen, einen zum Brennen von Kalkstein, Dolomit und dgl. geeigneten Ringschachtofen zu schaffen, bei dem als Energieträger heimische Kohle und insbesondere heimische Braunkohle verwendet werden kann.

Der Erfindung liegt die Aufgabe zugrunde, einen Ringschachtofen zum Brennen von Kalkstein, Dolomit und dgl. zu schaffen, der mit staubförmiger Kohle und insbesondere staubförmiger Braunkohle als Energieträger betrieben werden kann.

Diese Aufgabe wird erfindungsgemäss dadurch gelöst, dass ausgehend von dem aus der EP-A 82886 bekannten Ringschachtofen alle Brenner einer Ebene mit gleicher Menge Kohlenstaub als Brennstoff zu beschicken sind, dass das Mengenverhältnis des den beiden Brennerebenen zugeführten Kohlenstaubes regelbar und einstellbar ist und dass für jede Gruppe von Brennern eine gemeinsame Zufuhrleitung für Kohlenstaub vorgesehen ist und es sich in jeder Zufuhrleitung als Dosierelement eine regelbare Zellenradschleuse befindet. Dementsprechend kann man mit dem erfindungsgemäss ausgebildeten Ringschachtofen zum Brennen von Kalkstein oder dgl. als Energieträger Kohlenstaub und insbesondere Braunkohlenstaub benutzen. Der Kohlenstaub wird auf zwei Brennerebenen verteilt zugeführt, wobei beispielsweise in der oberen Brennerebene zwischen 45 und 65% und in der unteren Brennerebene zwischen 55 und 35% der Heizenergie verbraucht wird.

Der als Brennstoff dienende Kohlenstaub wird jeweils gleichmässig auf die Brenner jeder Ebene verteilt, so dass alle Brenner einer Ebene mit gleichen Mengen Brennstoff versorgt werden, damit sich auf dem gesamten Umfang des Ringschachtofens gleiche Betriebsverhältnisse einstellen.

Die in jeder Zufuhrleitung als Dosierelement vorgesehene Zellenradschleuse dient zur Aufgabe des Kohlenstaubes bzw. Braunkohlenstaubes.

Vorzugsweise ist für beide Zufuhrleitungen ein gemeinsames Gebläse vorgesehen, so dass die von diesem erzeugte Druckluft den in die Zellenradschleusen gelangten Kohlenstaub zu den einzelnen Brennern fördert. Dort wird der Kohlenstaub zerstäubt, so dass man einen einwandfreien Abbrand erzielt.

Zweckmässig münden die oberen Brenner schräg bis tangential in den Schacht des Ringschachtofens, wodurch eine gute Verwirbelung und Ausnutzung der Heizgase im Ringschachtofen erzielt wird. Die Brenner der unteren Ebenen sind hingegen etwa radial zum Schacht des Ringschachtofens angeordnet. Die Brenner beider Ebenen werden impulsartig nacheinander mit Brennstoff versorgt, wobei die Impulsfolge in den beiden Brennerebenen so gewählt ist, dass sich die Brennstoffzufuhren der oberen und unteren Brennerebenen gegenseitig nicht negativ beeinflussen. Dies erreicht man dadurch, dass die Impulsfolge der Brennstoffzufuhr gegenläufig ist.

Die Verteilung des Brennstoffes erfolgt unterhalb der oberen Ofenbrücken, welche den zentralen Innenzylinder des Ringschachtofens abstützen und zur Führung der Umwälzluft dienen können. Die bei herkömmlichen Ringschachtöfen vorhandenen oberen Brennkammern werden dazu nicht benötigt, obwohl sie, wenn vorhanden, auch benutzt werden können. Die Brenner sind Lanzen und bestehen jeweils aus einem einfachen Rohr mit speziellem Mundstück für die Brennstoffzerstäubung, wobei diese Rohre austauschbar sind und aus hitzebeständigem Material bestehen. Derart einfache Brenner sind betriebssicher und wartungsarm und können bei Bedarf jederzeit auch gegen andere Brenner gleicher Konstruktion ausgetauscht werden. Ferner ist es möglich, bei Bedarf auch Brenner, die mit anderen Brennstoffen arbeiten, beispielsweise Ölbrenner oder Gasbrenner, in die vorhandenen Brennkammern einzubauen. Dies hat den Vorteil, dass man den Ringschachtofen zum Anfahren mit Erdöl oder Erdgas beheizen kann und erst, wenn er auf die normale Arbeitstemperatur aufgeheizt worden ist, den Betrieb auf die Verbrennung von Kohlenstaub umzuschalten braucht.

Durch die Verwendung von speziellen Mundstücken an den Lanzen der oberen Brenner lässt sich die Kohlenstaubmenge auf beide Schüttungen des zu brennenden Gesteines rechts und links unterhalb der Ofenbrücken nahezu gleichmässig verteilen, so dass keine Minderungen der Branntkalkqualität durch zu einseitigen Brand zu befürchten sind.

Die Zerstäubung des Kohlenstaubes kann bei den Brennkammern der unteren Brennerebene mittels der Lanzen dergestalt erfolgen, dass sich eine optimale Verwirbelung mit dem diesen Lanzen zugeführten Umwälzgas ergibt und auch hier ein einwandfreier Abbrand des Kohlenstaubes stattfindet. Dabei wird die für den Ringschachtofen wichtige Gleichstrombrandzone beibehalten, so dass eine einwandfreie Branntkalkqualität gewährleistet ist.

Das Umwälzgas des Ringschachtofens wird durch eine einfache automatische Steuerung auf konstanter Temperatur gehalten, und zwar durch kurzfristiges Abschalten der Brennstoffzufuhr zu den Brennern wenigstens der unteren Brennerebene. Auf diese Weise lassen sie die Temperaturabweichungen des Umwälzgases auf einen Bereich von ±5 bis 20°C beschränken. Daher kann man die Austragmenge des Branntkalkes aus dem Ofen nahezu konstant halten.

Eine schräge Zufuhr des Brennstoffes in den Ringschachtofen ist an sich unerwünscht, weil die Heizgase dadurch einseitig auf das zu brennende Gestein auftreffen und somit Ungleichförmigkeiten der Branntkalkqualität zu befürchten sind. Da erfindungsgemäss jedoch die Brenner ein spezielles Mundstück haben, hat sich überraschend gezeigt, dass sich die Heizgase trotz der schrägen Anordnung der Brennerlanzen der oberen Brennerebene im Ringschachtofen gleichmässig verteilen und man dementsprechend eine gleichförmige Branntkalkqualität erzielt.

In der Zeichnung ist ein Ausführungsbeispiel eines für die Verbrennung von Kohlenstaub geeigneten Ringschachtofens schematisch dargestellt, und zwar zeigt

Fig. 1 einen senkrechten Teilschnitt durch den Ringschachtofen,

Fig. 2 eine schematische Darstellung der Brennstoffzufuhr,

Fig. 3 eine Teilansicht der Lanze eines Brenners der oberen Brennerebene,

Fig. 4 eine Stirnansicht der Lanze aus Fig. 3,

Fig. 5 eine Teilansicht der Lanze eines Brenners der unteren Brennerebene,

Fig. 6 eine Stirnansicht der Lanze aus Fig. 5,

Fig. 7 eine Teilansicht einer anderen Ausführungsform der Lanze eines Brenners der oberen Brennerebene,

Fig. 8 eine Stirnansicht der Lanze aus Fig. 7,

Fig. 9 eine Teilansicht einer anderen Ausführungsform der Lanze eines Brenners der unteren Brennerebene und

Fig. 10 eine Stirnansicht der Lanze aus Fig. 9.

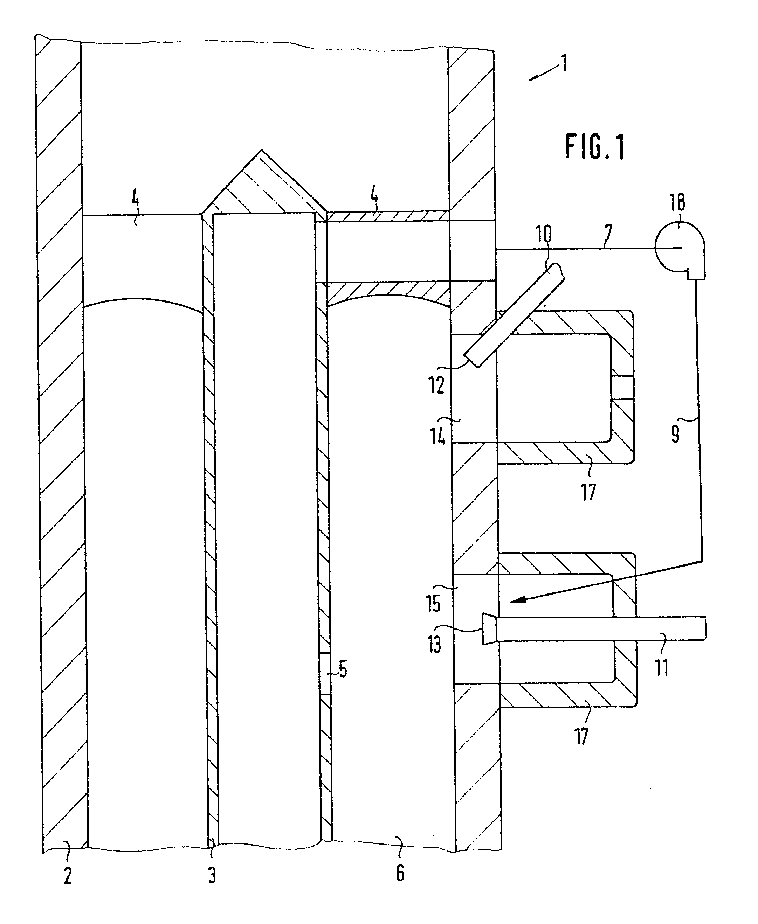

Der in Fig. 1 dargestellte Ringschachtofen 1 hat einen aufrecht stehenden Aussenzylinder 2, in dessen Zentrum ein Innenzylinder 3 angeordnet ist, der von Brücken 4 im Aussenzylinder 2 gehalten wird. Der Innenzylinder 3 ist hohl ausgebildet und enthält in seiner Wand Öffnungen 5, durch die Umwälzgas aus dem Schacht 6 abströmen kann, das durch wenigstens eine der Brücken 4 zu einer Leitung 7 gelangt, die mit einer weiteren Leitung 9 mit Lanzen 11 in Verbindung steht, welche als Brenner einer unteren Brennerebene dienen. Diese und weitere Lanzen 10 einer oberen Brennerebene sind Rohre aus hochfestem, hitzebeständigem Material. Sie sind auswechselbar am Aussenzylinder 2 des Ringschachtofens 1 angebracht und ragen mit speziell ausgebildeten Mundstücken 12 bzw. 13 in Öffnungen 14 bzw. 15 des Aussenzylinders 2.

In Fig. 1 ist erkennbar, dass die Lanzen 10 der oberen Brennerebene schrägstehend angeordnet sind, während die Lanzen 11 der unteren Brennerebene jeweils in einer Brennkammer 17, welche auf der Aussenseite des Aussenzylinders 2 befestigt ist, etwa radial zum Schacht 6 stehend angebracht sind.

Die Lanzen 10 und 11 liegen in zwei Ebenen übereinander. Jede dieser Ebenen kann mehrere Lanzen gleicher Art aufweisen, beispielsweise vier Lanzen, die gleichmässig auf den Umfang des Aussenzylinders 2 verteilt sind.

Ein Gebläse 18 zwischen den Leitungen 7 und 9 sorgt dafür, dass das Umwälzgas den Lanzen 11 zugeführt wird, damit es mit dem als Brennstoff benutzten Braunkohlenstaub bei der Verbrennung vermischt wird.

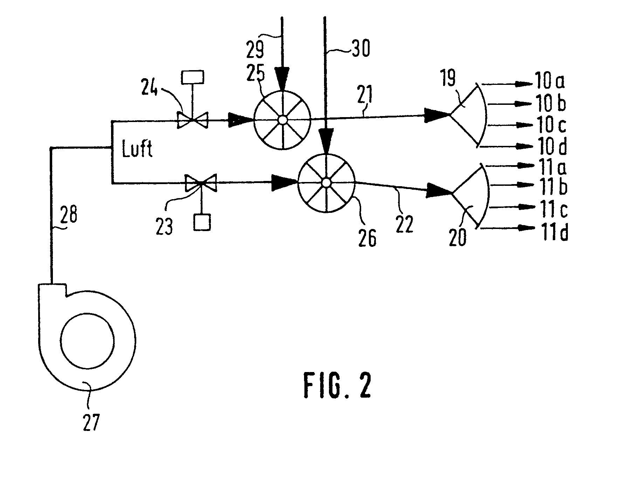

Aus Fig. 2 ist zu erkennen, dass jeweils vier Lanzen 10a bis 10d und vier Lanzen 11a bis 11d in den beiden Brennerebenen vorgesehen sind. Die Lanzen 10 und 11 sind jeweils an einen Verteiler 19 bzw. 20 angeschlossen, der durch eine Rohrleitung 21 bzw. 22 zugeführten staubförmigen Brennstoff in kontinuierlicher Impulsfolge gleichmässig auf alle Brenner der betreffenden Ebene verteilt. Die Impulsfolge ist in den beiden Brennerebenen gegenläufig, so dass in der oberen Brennerebene die Lanzen in der Folge 10a bis 10d und in der unteren Brennerebene die Lanzen in der Folge 11d bis 11a nacheinander mit Braunkohlenstaub beschickt werden. Dadurch vermeidet man eine ungünstige gegenseitige Beeinflussung der Brennstoffzufuhr der beiden Brennerebenen.

Die für die Rückführung des Umwälzgases dienende Leitung ist an die Brennkammern 17 der unteren Brennerebene angeschlossen.

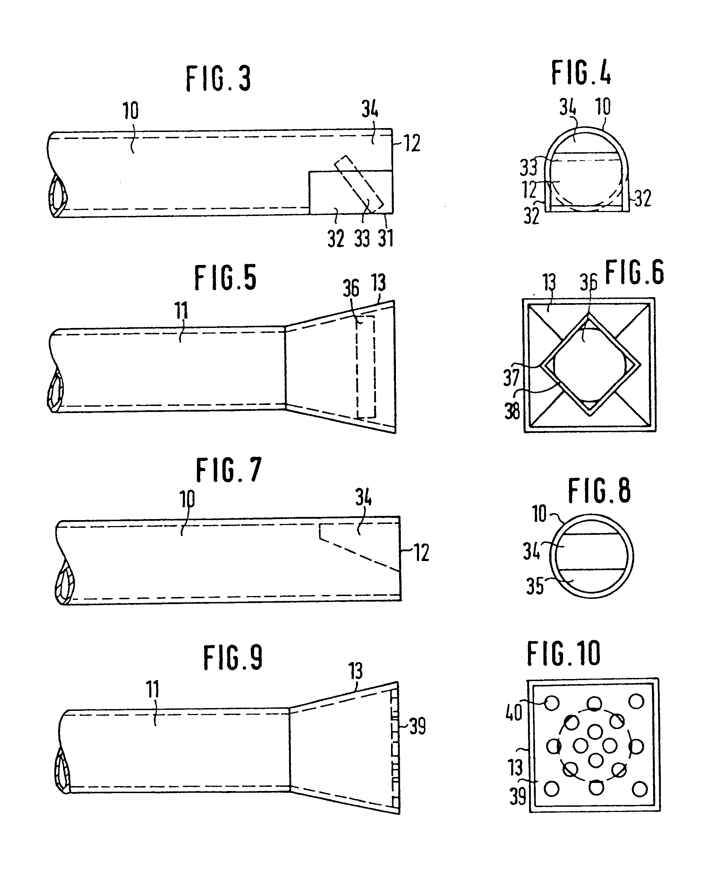

In jeder Leitung 21 und 22 befindet sich jeweils eine Zellenradschleuse 25 und 26, welche durch Leitungen 29 und 30 mit Braunkohlenstaub zu beschicken sind. An die Zellenradschleusen 25 und 26 ist ein Gebläse 27 angeschlossen, durch dessen Druckleitung 28 Druckluft an die Rohrleitungen 21 und 22 und damit zu den Zellenradschleusen 25 und 26 gelangt, damit der Braunkohlenstaub aus den Zellenradschleusen durch die betreffenden Rohrleitungen 21 und 22 zu den Verteilern 19 und 20 und damit den Lanzen 10 und 11 gefördert wird. Absperrventil 23 und 24 in den Rohrleitungen 21 und 22 dienen zum Abstellen der Druckluftzufuhr. Die Lanzen 10 und 11 sind als einfache Rohre aus hitzebeständigem Material ausgebildet und bestehen vorzugsweise aus Edelstahl, beispielsweise Sicromal. Einzelheiten ihrer Mundstücke 12 bzw. 13 sind aus den Figuren 3 bis 10 zu entnehmen.

Fig. 3 und 4 zeigen eine Ausführungsform einer Lanze 10, bei der das Mundstück 12 an der Unterseite einen Ausschnitt 31 zwischen parallelen Wandabschnitten 32 aufweist. Im Bereich des Ausschnittes 31 ist in das Rohr der Lanze 10 eine schrägstehende Prallplatte 33 eingebaut, über der sich eine Öffnung 34 befindet, durch die ein Teil des durch die Lanze herangeführten Brennstoff-Luft-Gemisches etwa in Richtung der Längsachse der Lanze 10 austritt. Der Rest des Brennstoff-Luft-Gemisches tritt vor der Prallplatte 33 aus dem Ausschnitt 31 aus der Lanze 10 aus und damit entsprechend der Schrägstellung der Prallplatte 33 in einem vorgegebenen Winkel zu dem Teil des Brennstoff-Luft-Gemisches, das durch die Öffnung 34 ausgeblasen wird. Beide Teilströme des Brennstoff-Luft-Gemisches werden im Bereich des Mundstückes 12 so zerstäubt, dass eine einwandfreie Verbrennung stattfindet, bevor der Brennstoff auf die Schüttungen des im Schacht 6 befindlichen Gesteines auftrifft.

Bei der Ausführungsform gemäss Fig. 7 und 8 enthält die Lanze 10 im Bereich ihres Mundstückes 12 einen Einsatz 34, unter dem eine verengte Öffnung 35 frei bleibt. Auch bei dieser Ausführungsform findet eine einwandfreie Zerstäubung des durch die Lanze 10 herangeförderten Brennstoff-Luft-Gemisches am Mundstück 12 statt.

Aus Fig. 5 und 6 ist zu erkennen, dass die Lanze 10 mit einem sich pyramidenförmig erweiternden Mundstück 13 versehen ist. In dieses erweiterte Mundstück 13 ist eine quadratische Prallplatte 36 eingesetzt, die mit ihren Ecken 37 an der Innenseite des Mundstückes 13 befestigt, beispielsweise festgeschweisst ist, während sich zwischen den Ecken 37 segmentförmige Öffnungen 38 befinden, durch die das durch die Lanze 11 herangeführte Brennstoff-Luft-Gemisch austreten kann, wobei die für einen einwandfreien Abbrand gewünschte Zerstäubung stattfindet.

Auch bei der Ausführungsform gemäss Fig. 9 und 10 ist das Mundstück 13 der Lanze 11 pyramidenförmig ausgebildet. In diesem Fall ist das Mundstück am äusseren Ende mit einer Lochplatte 39 verschlossen, deren Löcher 40 für eine einwandfreie Zerstäubung des durch die Lanze 11 herangeführten Brennstoffes sorgen.

## Patentansprüche

1. Ringschaftofen zum Brennen von Kalkstein, Dolomit und dgl., mit einem aufrecht stehenden Aussenzylinder (2), in den von oben zerkleinertes rohes Gestein eingeschüttet und aus dem am unteren Ende beispielsweise Branntkalk abgeführt wird, mit einem zentralen Innenzylinder (3) und mit an der Wand des Aussenzylinders ringförmig verteilt angeordneten Brennern (10; 11), deren Heizgase durch das eingeschüttete zerkleinerte Gestein strömen, wobei die Brenner (10; 11) gruppenweise in wenigstens zwei Ebenen übereinander versetzt am Aussenzylinder (2) des Ringschachtofens (1) angeordnet und mit staubförmigem Brennstoff zu beschicken sind, dadurch gekennzeichnet, dass alle Brenner (10 bzw. 11) einer Ebene mit gleicher Menge Kohlenstaub als Brennerstoff zu beschicken sind, dass das Mengenverhältnis des den beiden Brennerebenen zugeführten Kohlenstaubes regelbar und einstellbar ist und dass für jede Gruppe von Brennern (10 und 11) eine gemeinsame Zufuhrleitung (21; 22) für Kohlenstaub vorgesehen ist und sich in jeder Zufuhrleitung eine regelbare Zellenradschleuse (25; 26) als Dosierelement befindet.

2. Ringschachtofen nach Anspruch 1, dadurch gekennzeichnet, dass für beide Zufuhrleitungen (21; 22) ein gemeinsames Gebläse (27) für Transportluft vorgesehen ist.

3. Ringschachtofen nach Anspruch 1 oder 2, dadurch gekennzeichnet, dass die Brenner (10) der oberen Ebene schräg bis tangential in den Schacht (6) münden und dass die Brenner (11) der unteren Ebene etwa radial zum Schacht angeordnet sind.

4. Ringschachtofen nach einem der Ansprüche 1 bis 3, dadurch gekennzeichnet, dass zur Regelung der Temperatur des Umwälzgases die Brennstoffzufuhr zu den einzelnen Brennern (10; 11) jeweils kurzzeitig abschaltbar ist.

5. Ringschachtofen nach einem der Ansprüche 1 bis 4, dadurch gekennzeichnet, dass jeder Brenner (10; 11) eine leicht austauschbare Lanze aus hitzebeständigem Rohr aufweist.

6. Ringschachtofen nach Anspruch 5, dadurch gekennzeichnet, dass jede Lanze (10; 11) am Auslassende (12; 13) mit einem düsenartigen Mundstück zum Zerstäuben des Kohlenstaubes versehen ist.

7. Ringschachtofen nach Anspruch 6, dadurch gekennzeichnet, dass das Mundstück der Lanzen (10) der oberen Brennerebene zwei etwa rechtwinklig zueinander stehende Auslassöffnungen (31; 34) aufweist.

## Claims

1. Ring shaft furnace for calcining limestone, dolomite or the like, comprising a vertical outer cylinder (2) through the upper portion of which is fed crushed raw rock material and from the lower portion of which is removed for instance burnt lime, further comprising a central inner cylinder (3) and burners (10; 11) circularly distributed over the outer cylinder wall the combustion gases of which flow through the fed-in crushed rock material, said burners (10; 11) being arranged in groups in offset relationship in at least two planes one above the other at outer cylinder (2) of ring shaft furnace (1), and said burners being supplied with powdered combustion material, characterized in that all burners (10 or 11) provided in one plane are to be supplied with the same amount of coal dust as combustion material, that the quantity ratio of the coal dust supplied to both combustion planes may be controlled and adjusted and that for each group of burners (10 and 11) is provided a common supply line (21; 22) for coal dust and that each of said supply lines is provided with a bucket wheel flood-gate (25; 26) as dosaging element.

2. Ring shaft furnace as defined by claim 1, characterized in that for both supply lines (21; 22) is provided a common blower (27) for conveying air.

3. Ring shaft furnace as defined by either of claims 1 or 2, characterized in that burners (10) of the upper plane open in diagonal to tangential configuration into shaft (6) and that burners (11) of the lower plane are arranged approximately radially with respect to said shaft.

4. Ring shaft furnace as defined by either of claims 1 to 3, characterized in that for controlling the temperature of the circulating gas the combustion material supply to each of burners (10; 11) may be temporarily switched off.

5. Ring shaft furnace as defined by either of claims 1 to 4, characterized in that each of said burners (10; 11) is provided with easily interchangeable lances made of refractory tube.

6. Ring shaft furnace as defined by claim 5, characterized in that outlets (12; 13) of each of lances (10; 11) are provided with a nozzle-type mouthpiece for atomizing the coal dust.

7. Ring shaft furnace as defined by claim 6, characterized in that the mouthpiece of lances (10) of the upper burner plane is provided with two outlet openings (31; 34) arranged in approximately rectangular relationship.


## Revendications

1. Four à cuve annulaire pour la calcination de pierre à chaux, de dolomie et de produits similaires, comportant un cylindre extérieur (2) vertical dans lequel on introduit par le haut de la pierre à chaux brute réduite en petits morceaux et duquel on évacue par exemple de la chaux vive par l'extrémité inférieure, du cylindre central (3) et des brûleurs (10; 11) répartis circulairement sur la paroi du cylindre extérieur, dont les gaz de chauffage passent à travers la pierre en petits morceaux introduite en vrac, les brûleurs (10; 11) étant disposés en groupes décalés selon au moins deux plans situés l'un au-dessus de l'autre sur le cylindre extérieur (2) du four (1) à cuve annulaire et devant être alimentés avec un combustible sous forme pulvérulente, caractérisé par le fait que tous les brûleurs (10, respectivement 11) d'un plan doivent être alimentés avec une quantité égale de poussière de charbon comme combustible, que le rapport quantitatif de la poussière de charbon amenée dans les deux plans de brûleurs est réglable et régulable, que pour chaque groupe de brûleurs (10 et 11) est prévu un conduit commun (21; 22) pour la poussière de charbon et qu'un alimentateur à roue cellulaire (25; 26) régulable est disposé dans chaque conduit d'alimentation en tant qu'élément de dosage.

2. Four à cuve annulaire selon la revendication 1, caractérisé par le fait qu'une soufflerie (27) commune aux deux conduits d'amenée (21; 22) est prévue pour l'air de transport.

3. Four à cuve annulaire selon la revendication 1 ou 2, caractérisé par le fait que les brûleurs (10) du plan supérieur débouchent de façon oblique à tangentielle dans la cuve (6), et que les brûleurs (11) du plan inférieur sont disposés à peu près radialement par rapport à la cuve.

4. Four à cuve annulaire selon l'une des revendications 1 à 3, caractérisé par le fait que pour la régulation de la température du gaz de circulation, l'alimentation en combustible aux différents brûleurs (10; 11) peut être interrompue cas par cas pendant de courtes périodes.

5. Four à cuve annulaire selon l'une des revendications 1 à 4, caractérisé par le fait que chaque brûleur (10; 11) présente une lance facile à changer, réalisée selon un tube résistant à la chaleur.

6. Four à cuve annulaire selon la revendication 5, caractérisé par le fait que chaque lance (10; 11) est munie à son extrémité de sortie (12; 13) d'une pièce d'embouchure du genre buse pour la dispersion de la poussière de charbon.

7. Four à cuve annulaire selon la revendication 6, caractérisé par le fait que la pièce d'embouchure des lances (10) du plan de brûleurs supérieur présente deux ouvertures de sortie (31; 34) qui forment entre elles approximativement un angle droit.

FIG.1

FIG. 2

0139025

FIG.3

FIG.4

FIG.5

FIG.6

FIG.7

FIG.8

FIG.9

FIG.10